# EUROPÄISCHE PATENTSCHRIFT

(11) **EP 1 356 979 B1**
(45) Veröffentlichungstag und Bekanntmachung des Hinweises auf die Patenterteilung: **06.02.2008**
(21) Anmeldenummer: 02027837.0
(22) Anmeldetag: 12.12.2002
(51) Int. Cl.: B60K 31/00, B60K 31/18

(54) **Fahrerassistenzsystem**
Driver assistance system
Système d'assistance pour conducteur

(30) Priorität: 26.04.2002 DE 10218698
(43) Veröffentlichungstag der Anmeldung: 29.10.2003
(73) Patentinhaber: ROBERT BOSCH GMBH, 70442 Stuttgart (DE)
(72) Erfinder: Gehrke, Helmar-Steffen, 71735 Eberdingen/Hochdorf (DE); Guenther, Clemens, 76275 Ettlingen (DE); Irion, Albrecht, 70563 Stuttgart (DE)

(56) Entgegenhaltungen:
- DE-A- 10 029 842
- DE-A- 19 958 520
- US-A- 5 197 562
- US-A- 5 695 020

## Beschreibung

Die Erfindung betrifft Fahrerassistenzsystem für Kraftfahrzeuge, mit mehreren Teilfunktionen, die den Fahrer bei der Fahrzeugführung unterstützen.

### STAND DER TECHNIK

Ein typisches Beispiel für ein Fahrerassistenzsystem ist ein sogenanntes ACC-System (Adaptive Cruise Control), wie es z. B. beschrieben wird in dem Aufsatz "Adaptive Cruise Control - System Aspects and Development Trends"- von Winner, Witte et al., veröffentlicht auf der SAE 96 vom 26. bis 29. Februar 1996 in Detroit (SAE Paper No. 96 1010). Bei einem solchen ACC-System wird die Geschwindigkeit des Fahrzeugs automatisch auf eine vom Fahrer vorgebbare Wunschgeschwindikeit geregelt. Weiterhin ist das System mit einem Abstandssensor, beispielsweise einem Radarsensor ausgerüstet, mit dem vorausfahrende Fahrzeuge geortet werden können. Wenn sich ein vorausfahrendes Fahrzeug auf der eigenen Fahrspur befindet, so erfolgt statt der Regelung auf die Wunschgeschwindigkeit eine Regelung auf einen geeigneten Sicherheitsabstand zu dem vorausfahrenden Fahrzeug. Dieser Abstand ist geschwindigkeitsabhängig und wird deshalb zumeist in der Form einer Zeitlücke τ ausgedrückt, die als Quotient aus dem Abstand und der Eigengeschwindigkeit des Fahrzeugs definiert ist. Das ACC-System greift nicht nur in das Antriebssystem des Fahrzeugs, sondern in bestimmten Situationen, insbesondere bei einer Unterschreitung des Sicherheitsabstands zum vorausfahrenden Fahrzeug, auch in das Bremssystem ein. Die im Rahmen dieses Systems zugelassenen Bremsverzögerungen sind jedoch auf Werte beschränkt, die von den Fahrzeuginsassen nicht als unkomfortabel oder beunruhigend empfunden werden. In Notsituationen, in denen eine akute Kollisionsgefahr droht, beispielsweise weil ein auf der Nebenspur fahrendes Fahrzeug auf die eigene Spur ausschert, soll die Kontrolle dem Fahrer überlassen bleiben, damit die Notsituation sicher beherrscht werden kann.

DE 100 15 299 A beschreibt ein ACC-System, bei dem zusätzlich eine Warnfunktion implementiert ist, in die eine optische und/oder akustische Übernahmeaufforderung an den Fahrer ausgibt, wenn anhand bestimmter Kriterien festgestellt wird, daß eine akute Kollisionsgefahr droht und deshalb ein Eingriff des Fahrers erforderlich ist.

Andererseits sind reine Geschwindigkeitsregelsysteme ohne Abstandsregelfunktion bekannt.

Aus der US 5,197,562 ist ein Tempomat nach dem Oberbegriff des Anspruchs 1 für ein Fahrzeug bekannt, der einen Sensor zur Bestimmung der momentanen Fahrzeuggeschwindig aufweist, eine Steuereinrichtung zur Geschwindigkeitsregelung aufweist, die die Fahrzeuggeschwindigkeit auf einer vorgewählten Geschwindigkeit hält, eine Messeinrichtung zur Messung des momentanen Abstands zwischen dem Fahrzeug und einem vorherfahrenden Fahrzeug sowie eine Zwischenfahrzeugabstandsregeleinrichtung, die den Zwischenfahrzeug-Abstand zwischen dem Fahrzeug und dem vorherfahrenden Fahrzeug auf einem vorbestimmten Abstand hält, der von einem Gefährdungsgrad abhängt, der vom Verhältnis des Zwischenfahrzeugabstands und der Relativgeschwindigkeit der beiden Fahreug abhängt. Eine Bedieneinrichtung erlaubt das Einschalten entweder der Geschwindigkeitsregelung oder der Zwischenfahrzeugabstandsregelung.

Der Funktionsumfang wird bei bekannten Fahrerassistenzsystemen vom Hersteller festgelegt, und der Fahrer hat lediglich die Option, das System entweder ein- oder auszuschalten und im eingeschalteten Zustand die Wunschgeschwindigkeit sowie gegebenenfalls weitere Parameter, z. B. die gewünschte Zeitlücke, einzugeben. Sofern der Hersteller Systeme mit unterschiedlichen Funktionsumfang anbietet, erfolgt die Festlegung des Funktionsumfangs gemäß den Vorgaben des Kunden.

### AUFGABE, LÖSUNG UND VORTEILE DER ERFINDUNG

Aufgabe der Erfindung ist es, ein Fahrerassistenzsystem zu schaffen, mit dem unterschiedlichen Kundenwünschen auf einfache Weise Rechnung getragen werden kann.

Diese Aufgabe wird erfindungsgemäß durch die Merkmale des Anspruchs 1 gelöst.

Bei dem erfindungsgemäßen System hat somit der Fahrer die Möglichkeit, den vom Hersteller bereitgestellten Funktionsumfang individuell nach eigenen Wünschen zu beschränken. Die Erfindung trägt damit dem Umstand Rechnung, daß Fahrzeuge, insbesondere solche der gehobenen Klasse, bei denen das Fahrerassistenzsystem generell einen hohen Funktionsumfang bietet, auch von Kunden gekauft werden, die bestimmte Teilfunktionen des Fahrerassistenzsystems nicht oder jedenfalls nicht immer in Anspruch nehmen möchten. Da erfindungsgemäß der Fahrer die Möglichkeit hat, die nicht gewünschten Teilfunktionen einzeln abzuschalten, wird die Logistik bei der Herstellung und Auslieferung der Kraftfahrzeuge entsprechend der Wünschen der Kunden erleichtert.

Ein weiterer Vorteil der Erfindung besteht darin, daß der Fahrer die Möglichkeit hat, bestimmte Teilfunktionen je nach Stimmungslage oder je nach Verkehrssituation zu- oder abzuschalten. So wird der Fahrer beispielsweise bei einer Urlaubsreise und/oder bei geringem Verkehrsaufkommen eine entspannte Fahrweise bevorzugen und den vollen Funktionsumfang des Fahrerassistenzsystems in Anspruch nehmen wollen, während er sich in anderen Situationen durch bestimmte Teilfunktionen des Systems eher gestört fühlt und diese abschalten möchte.

Die Erfindung ist nicht auf ein ACC-System beschränkt, sondern ist auch bei Fahrassistenzssystemen anwendbar, die andere Funktionen oder zusätzliche, über das ACC-System hinausgehende Teilfunktionen bieten, beispielsweise eine Querführungsunterstützung, bei der je nach Funktionsumfang ein automatischer Eingriff in die Fahrzeuglenkung erfolgt, um das Fahrzeug auf der Mitte der befahrenen Fahrspur zu halten, oder lediglich eine Spurverlassenswarnung ausgegeben wird, wenn der Fahrer den Grenzen der derzeit befahrenen Spur bedenklich nahe kommt.

Vorteilhafte Ausgestaltungen der Erfindung ergeben sich aus den Unteransprüchen.

Um dem Fahrer trotz der Vielzahl der verschiedenen Konfigurationsmöglichkeiten eine einfache und übersichtliche Bedienung des Systems zu ermöglichen, ist es zweckmäßig, mehrere vordefinierte Betriebsmodi, die sich in der Auswahl der aktiven Teilfunktionen unterscheiden, in einer nach Funktionsumfang halbgeordneten Reihe anzuordnen und das Eingabeelement so zu gestalten, daß die verschiedenen Betriebsmodi mit Hilfe eines einzigen Eingabebefehls der Reihe nach durchgeschaltet werden können. Unter einer halbgeordneten Reihe soll hier eine Reihe verstanden werden, bei der mit steigender Platzziffer in der Reihe der Funktionsumfang entweder generell zunimmt (Halbordnung nach steigendem Funktionsumfang) oder generell abnimmt (Halbordnung nach fallendem Funktionsumfang). Beispielsweise sind die Betriebsmodi dann bei einer Halbordnung nach fallendem Funktionsumfang so angeordnet, daß für einen Betriebsmodus mit der Platzziffer i, der alle Funktionen eines anderen Betriebsmodus mit der Platzziffer j einschließt, die Beziehung i < j gilt.

Bei einem ACC-System kann der volle Funktionsumfang z.B. die folgenden Teilfunktionen einschließen: Geschwindigkeitsregelung, Abstandsregelung und Warnfunktion (Übemahmeaufforderung). Als weitere Teilfunktion ist bevorzugt die Ausgabe einer Abstandskorrekturaufforderung vorgesehen. Diese Option kann dann gewählt werden, wenn die Abstandsregelung nicht aktiv ist. Wenn dann eine signifikante Abweichung zwischen dem durch die Zeitlücke bestimmten Sollabstand und dem Istabstand eintritt, ohne daß bereits die Bedingungen für eine Übernahmeaufforderung bzw. Kollisionswarnung gegeben sind, erhält der Fahrer durch ein optisches oder akustisches Signal die Aufforderung, den Abstand zum vorausfahrenden Fahrzeug zu korrigieren.

In einer besonders vorteilhaften Ausführungsform ist das Eingabeelement, das zur Wahl des Vertriebsmodus dient, als Drehknopf ausgebildet, der zugleich die Funktion eines Drucktasters hat. Durch Betätigung des Drucktasters wird dann von einem Betriebsmodus zum nächsten weitergeschaltet, während durch Drehen des Knopfes ein für die jeweils ausgewählte Funktion maßgeblicher Parameter, beispielsweise die Zeitlücke, verändert werden kann.

### KURZBESCHREIBUNG DER ZEICHNUNGEN

Im folgenden wird ein Ausführungsbeispiel der Erfindung anhand der Zeichnung näher erläutert.

Es zeigen:
- Fig. 1: ein Blockdiagramm eines Fahrerassistanzsystems gemäß der Erfindung;
- Fig. 2: eine Tabelle, in der unterschiedliche Betriebsmodi des Fahrerassistenzsystems sowie zugehörige Parameter angegeben sind; und
- Fig. 3: eine schematisierte perspektivische Darstellung eines Eingabeelements für das Fahrerassistenzsystem nach Figuren 1 und 2.

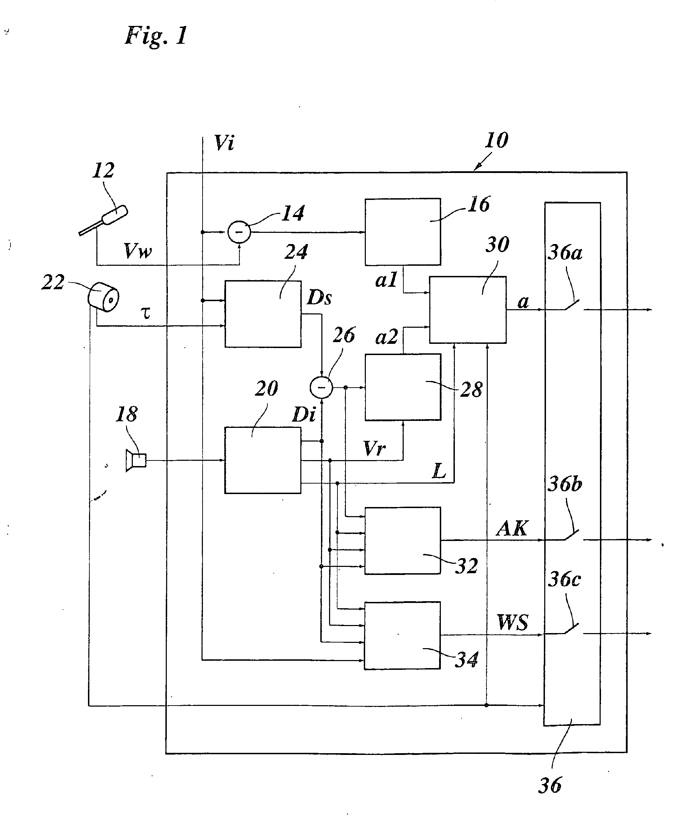

Bei dem in Figur 1 gezeigten Fahrerassistenzsystem handelt es sich um ein ACC-System 10 zur Abstands- und Geschwindigkeitsregelung.

Mit Hilfe eines vorzugsweise am Lenkrad angeordneten Multifunktionshebels 12 kann der Fahrer in bekannter Weise eine Wunschgeschwindigkeit Vw für die Geschwindigkeitsregelung vorgeben. Ein kurzes Antippen des Multifunktionshebels 12 nach oben oder nach unten bewirkt, daß die aktuelle Geschwindigkeit des Fahrzeugs als neue Wunschgeschwindigkeit übernommen wird. Längeres Halten des Hebels in der nach oben oder nach unten veschwenkten Position bewirkt, daß die Wunschgeschwindigkeit schrittweise erhöht bzw. gesenkt wird. Ein Subtraktionsglied 14 berechnet die Differenz zwischen der Wunschgeschwindigkeit Vw und der gemessenen Istgeschwindigkeit Vi des Fahrzeugs und liefert ein der Soll/Ist-Abweichung entsprechendes Signal an einen Geschwindigkeitsregelblock 16, der eine Sollbeschleunigung a1 berechnet, durch die die Istgeschwindigkeit des Fahrzeugs mit der Wunschgeschwindigkeit in Übereinstimmung gebracht wird. Die Sollbeschleunigung a1 kann auch negative Werte haben (Verzögerung). Falls das Bremsdrehmoment des Motors nicht ausreicht, diese negative Sollbeschleunigung zu realisieren, erfolgt ein automatischer Eingriff in das Bremssystem des Fahrzeugs.

Ein Radarsensor 18 ortet Objekte, insbesondere vorausfahrende Fahrzeuge, die sich vor dem eigenen Fahrzeug befinden, und mißt deren Abstände, Azimutwinkel und Relativgeschwindigkeiten. Ein Detektionsblock 20 überprüft anhand dieser Daten, ob sich ein vorausfahrendes Fahrzeug auf der eigenen Spur befindet, und wählt dieses Fahrzeugs als Zielobjekt für die Abstandsregelung aus. Als Ausgangssignale liefert der Detektionsblock 20 den Ist-Abstand Di des Zielobjekts, dessen Relativgeschwindigkeit Vr sowie ein logisches Signal L, das das Vorhandensein eines Zielobjekts anzeigt.

Ein vorzugsweise an der Mittelkonsole des Kraftfahrzeugs angeordnetes Eingabeelement 22 dient u.a. zur Eingabe einer Zeitlücke τ, die als Regelparameter für die Abstandsregelung zugrunde zu legen ist. Ein Abstandsberechnungsblock 24 berechnet durch Multiplikation der Zeitlücke τ mit der Istgeschwindigkeit Vi einen Soll-Abstand Ds für das Zielobjekt. Ein Subtraktionsglied 26 bildet die Differenz zwischen dem Ist-Abstand Di und dem Soll-Abstand Ds des Zielobjektes und liefert ein entsprechendes Signal an einen Abstandsregelblock 28, der daraus unter Berücksichtigung der Relativgeschwindigkeit Vr eine Sollbeschleunigung a2 für die Abstandsregelung berechnet.

Ein Auswahlblock 30 bildet aus den Sollbeschleunigungen a1 und a2 eine endgültige Sollbeschleunigung a. Diese ist gleich a1, wenn kein vorausfahrendes Fahrzeug geortet wurde (L = 0), oder beispielsweise gleich dem Minimum von a1 und a2, wenn eine Abstandsregelung auf ein Zielobjekt durchgeführt wird.

Ein Abstandskontrollbock 32 nimmt die Signale des Detektionsblockes 20 und des Subtraktionsgliedes 26 auf und berechnet daraus eine Abstandskorrekturaufforderung AK, die immer dann ausgegeben wird, wenn ein vorausfahrendes Fahrzeug geortet wird und die Differenz zwischen Soll-Abstand Ds und Ist-Abstand Di dieses Fahrzeugs außerhalb bestimmter, vorzugsweise geschwindigkeitsabhängiger Toleranzgrenzen liegt.

Ein Warnfunktionsblock 34 nimmt die Signale des Detektionsblocks 20 auf und berechnet anhand dieser Signale sowie anhand der Istgeschwindigkeit Vi ein Warnsignal WS, das immer dann ausgegeben wird, wenn aufgrund der aktuellen Werte des Istabstands Di und der Relativgeschwindigkeit Vr des georteten Zielobjektes eine Kollision zu befürchten ist und somit ein relativ energischer Eingriff des Fahrers erforderlich ist, um die Kollision abzuwenden.

Das Eingabeelement 22 hat im gezeigten Beispiel zugleich die Funktion eines Wählschalters, mit dem verschiedene Betriebsmodi des ACC-Systems 10 gewählt werden können. Das Signal, das den ausgewählten Betriebsmodus angibt, wird an den Auswahlblock 30 sowie an einen Funktionswahlblock 36 weitergeleitet. Der Funktionswahlblock 36 erfüllt die Funktion mehrerer Schalter 36a, 36b, 36c, mit denen je nach gewähltem Betriebsmodus die Weiterleitung eines oder mehrerer der Signale a, AK und WS blockiert werden kann.

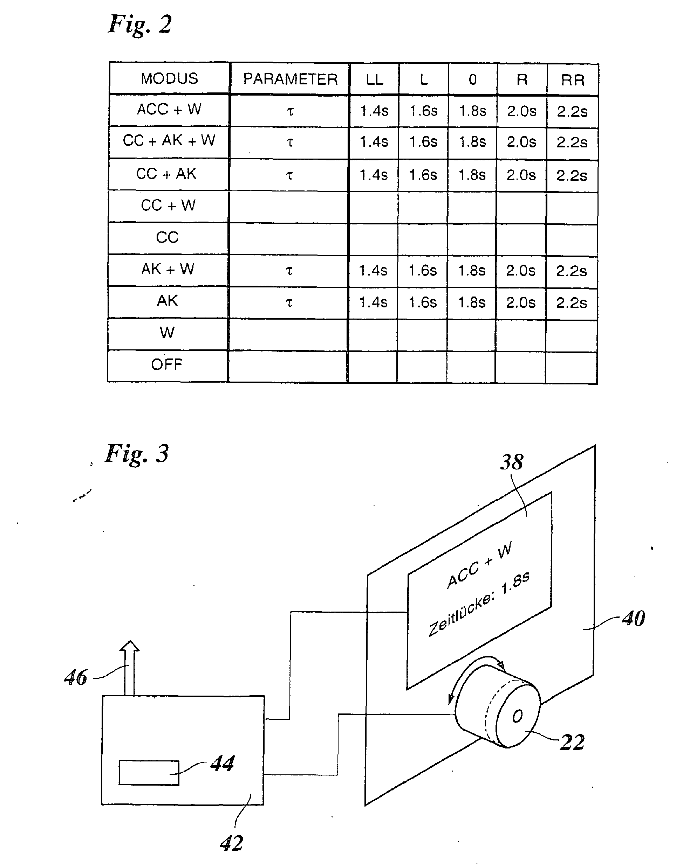

Figur 2 zeigt eine Tabelle, in der in der ersten Spalte die verfügbaren Betriebsmodi der Reihe nach aufgelistet sind. Bei dem in der ersten Zeile angegebenen Modus "ACC + W" sind die ACC-Funktion, also Geschwindigkeitsregelung und Abstandsregelung, sowie die Warnfunktion des Warnfunktionsblockes 34 aktiv. Dementsprechend sind in diesem Modus die Schalter 36a und 36c geschlossen, während der Schalter 36b geöffnet ist. Dieser Betriebsmodus entspricht dem maximalen Funktionsumfang des ACC-Systems 10.

Im nächsten Modus "CC + AK + W" ist der Funktionsumfang insofern eingeschränkt, als anstelle der ACC-Funktion nur eine Geschwindigkeitsregelung durchgeführt wird und anstelle der Abstandsregelung lediglich die Ausgabe der Abstandskorrekturaufforderung AK erfolgt. In diesem Modus sind sämtliche Schalter 36a, 36b und 36c geschlossen. Die Funktion des Auswahlblockes 30 ist aber so modifiziert, daß als Sollbeschleunigung a stets nur die Sollbeschleunigung a1 des Geschwindigkeitsregelblockes 16 durchgelassen wird.

Der nächste Modus "CC + AK" unterscheidet sich von dem vorherigen Modus dadurch, daß der Schalter 36c geöffnet und somit die Warnfunktion inaktiviert ist.

Im dann folgenden Modus "CC + W" ist dagegen die Ausgabe der Abstandskorrekturaufforderung inaktiviert und stattdessen die Warnfunktion aktiv. Hier sind folglich die Schalter 36a und 36c geschlossen, und der Schalter 36b ist geöffnet.

In dem Modus "CC" ist lediglich die Geschwindigkeitsregelung aktiv, und es ist nur der Schalter 36a geschlossen.

Noch weiter eingeschränkt ist der Funktionsumfang in dem Modus "AK + W". Hier findet weder eine Abstandsregelung noch eine Geschwindigkeitsregelung statt. Gleichwohl wird der Abstand zum vorausfahrenden Fahrzeug überwacht, und bei einer Abweichung vom Sollabstand wird die Abstandskorrekturaufforderung AK ausgegeben. Bei Kollisionsgefahr wird das Warnsignal WS ausgegeben, das von der Abstandskorrekturaufforderung deutlich unterscheidbar ist und eine größere Dringlichkeit signalisiert.

Im nächsten Modus "AK" ist lediglich die Abstandskorrekturaufforderung aktiv, d.h., es ist nur der Schalter 36b geschlossen.

Umgekehrt ist im nächsten Modus "W" nur die Warnfunktion aktiv, und es ist nur der Schalter 36c geschlossen.

Im letzten Modus "OFF" sind sämtliche Funktionen inaktiv, d.h., das ACC-System ist ganz ausgeschaltet.

Die Arbeitsweise des ACC-Systems 10 in den Modi, in denen die Abstandsregelung oder die Abstandskorrekturaufforderung aktiv ist, wird durch den Parameter τ (Zeitlücke) beeinflußt, wie in der Tabelle gemäß Figur 2 in den entsprechenden Zeilen angegeben ist. Im gezeigten Beispiel kann die Zeitlücke τ auf fünf unterschiedliche Werte im Bereich von 1,4 bis 2,2 s eingestellt werden.

Figur 3 zeigt ein Beispiel für die Ausgestaltung des Eingabeelements 22, mit dem sowohl die Wahl des Betriebsmodus als auch die Wahl des Parameters τ und ggf. anderer Parameter möglich ist. Das Eingabeelement 22 ist hier als Drehknopf ausgebildet, der zugleich die Funktion eines Drucktasters erfüllt.

Durch Betätigen des Drucktasters wird jeweils der Betriebsmodus um einen Schritt weitergeschaltet, entsprechend einem Sprung in die nächsttiefere Zeile in Figur 2. Wenn die unterste Zeile (OFF) erreicht ist, so bewirkt die erneute Betätigung des Drucktasters das Einschalten des ACC-Systems und einen Sprung in die oberste Zeile, also zu dem Modus "ACC + W".

Sofern ein Modus gewählt wurde, für den die Zeitlücke τ ein relevanter Parameter ist, kann dieser Parameter durch Drehen des Eingabeelements 22 nach rechts oder nach links in Schritten von 0,2 s erhöht oder gesenkt werden. Auf diese Weise wird eine sehr ergonomische Einknopfbedienung des ACC-Systems 10 ermöglicht. Der jeweils eingestellte Betriebsmodus sowie ggf. der gültige Werte der Zeitlücke werden in einem Display 38 angezeigt, das beispielsweise oberhalb des Eingabeelements 22 in der Mittelkonsole 40 des Kraftfahrzeugs angeordnet ist. Das Eingabeelement 22 und das Display 38 sind mit einer Steuereinheit 42 verbunden, die einen Speicher 44 zur Speicherung des aktuellen Betriebsmodus und der eingestellten Parameter enthält und die ihrerseits über einen Datenbus 46, beispielsweise einen CAN-Bus, mit dem ACC-System 10 verbunden ist. Von Eingabeelement 22 erhält die Steuereinheit 42 lediglich Signale, die angeben, daß der Drucktaster betätigt wurde oder daß das Eingabeelement um einen bestimmten Winkel nach rechts oder nach links verdreht wurde. Im übrigen erfolgt die Wahl des Betriebsmodus und der Zeitlücke in der Steuereinheit 42.

Außer der Zeitlücke τ können wahlweise auch andere Parameter eingestellt werden, die für andere Betriebsmodi relevant ist. Beispielsweise könnte in den Modi, in denen der Warnfunktionsblock 34 wirksam ist, ein Parameter eingestellt werden, der die "Vorwarnzeit" für die Kollisionswarnung bestimmt. Dieser Parameter würde dann beispielsweise durch Drehen des Einstellelements 22 eingestellt, wenn sich das ACC-System im Modus "W" befindet.

Es ist auch denkbar, daß für die Zeitlücke τ im ACC-Modus ein anderer Wert als in den Modi gilt, in denen nur die Abstandskorrekturaufforderung AK ausgegeben wird.

Während im gezeigten Beispiel sämtliche Funktionsblöcke des ACC-Systems ständig aktiv sind und lediglich die Ausgangssignale mit Hilfe der Schalter 36a, 36c in Abhängigkeit vom Betriebsmodus blockiert werden, ist es in einer modifizierten Ausführungsform auch möglich, die verschiedenen Teilfunktionen dadurch zu aktivieren, daß direkt die betreffenden Funktionsblöcke im ACC-System inaktiviert werden oder daß die innerhalb dieser Funktionsblöcke benutzten Parameter, beispielsweise die Toleranzparameter innerhalb des Warnfunktionsblockes 34, so verändert werden, daß die Ausgabe des Signals unterdrückt wird.

Anstelle des Eingabeelements 22 in Figur 3 ist auch eine andere Anordnung von Eingabeelementen denkbar. Beispielsweise können in vier in der Form eines Kreuzes angeordnete Pfeiltasten vorgesehen seien. Die nach unten weisende Pfeiltaste dient dann zum Verringern des Funktionsumfangs (entsprechend dem Drücken des Drehknopfes in Figur 3), die nach oben weisende Pfeiltaste ermöglicht ein Vergrößern des Funktionsumfangs, und die rechten und linken Pfeiltasten dienen zur Wahl der Zeitlücke (entsprechend der Drehung des Drehknopfes).

Als weitere Alternative können die Eingabeelemente zur Wahl des Funktionsumfangs auch durch eine Reihe von Tasten gebildet werden, die jeweils einem der Betriebsmodi in Figur 2 zugeordnet sind. Eine Doppelreihe mit zwei Tasten in jeder Zeile ermöglicht zudem die Wahl des Parameters, beispielsweise der Zeitlükke. Durch die erste Betätigung einer der beiden Tasten wird dann der betreffende Modus aktiviert, und mit jedem weiteren Tastendruck in derselben Zeile wird der Parameter verändert.

Als weitere Möglichkeit kann das Eingabeelement auch durch den Multifunktionshebel 12 gebildet werden, der in Figur 1 gezeigt ist. Bisher wird dieser Multifunktionshebel nur in vier Richtungen geschwenkt: aufwärts und abwärts zum - Setzen und Erhöhen bzw. Verringern der Wunschgeschwindigkeit, nach hinten zum Löschen der Wunsch Geschwindigkeit und nach von zur Wiederaufnahme der Wunsch Geschwindigkeit. Eine Wahl des Funktionsumfangs kann durch Drehen des Multifunktionshebels um eine Längsachse erreicht werden. Beispielsweise können den verschiedenen Betriebsmodi verschiedene Raststellungen zugeordnet sein, an die in Winkelabständen von beispielsweise 30° liegen.

## Patentansprüche

1. Fahrerassistenzsystem für Kraftfahrzeuge, mit mehreren Teilfunktionen, die den Fahrer bei der Fahrzeugführung unterstützen, mit mindestens einem Eingabeelement (22), das es dem Fahrer gestattet, Teilfunktionen einzeln zu- oder abzuschalten, wobei mehrere vordefinierte Betriebsmodi vorgesehen sind, die jeweils eine Teilmenge der verfügbaren Teilfunktionen umfassen und nach Funktionsumfang halbgeordnet in einer Reihe angeordnet sind, und das Eingabeelement (22) dazu ausgebildet ist, durch einen einzigen Eingabebefehl von einem Betriebsmodus auf den nächsten weiterzuschalten **dadurch gekennzeichnet, daß** das Eingabeelement (22) als Drucktaster und zugleich als Drehknopf zur Wahl eines Parameters (t) für den jeweils eingestellten Betriebsmodus ausgebildet ist.

2. Fahrerassistenzsystem nach Anspruch 1, **dadurch gekennzeichnet, daß** eine der Teilfunktionen eine Geschwindigkeitsregelfunktion ist.

3. Fahrerassistenzsystem nach Anspruch 1 oder 2, **dadurch gekennzeichnet, daß** eine der Teilfunktionen eine Abstandsregelfunktion ist.

4. Fahrerassistenzsystem nach einem der vorstehenden Ansprüche, **dadurch gekennzeichnet, daß** eine der Teilfunktionen eine Warnfunktion ist, die den Fahrer durch ein Warnsignal (WS) auf eine drohende Kollisionsgefahr hinweist.

5. Fahrerassistenzsystem nach einem der vorstehenden Ansprüche, **dadurch gekennzeichnet, daß** eine der Teilfunktionen darin besteht, daß eine Abstandskorrekturaufforderung (AK) ausgegeben wird, wenn der gemessene Ist-Abstand (Di) zu einem vorausfahrenden Fahrzeug signifikant von einem vorgegebenen Soll-Abstand (Ds) abweicht.

6. Fahrerassistenzsystem nach den Ansprüchen 3 und 5, **dadurch gekennzeichnet, daß** der Sollabstand für die Abstandsregelung der gleiche ist wie für die Abstandskorrekturaufforderung.

7. Fahrerassistenzsystem nach einem der vorstehenden Ansprüche, **gekennzeichnet durch** ein Display (38) zur Anzeige der jeweils eingeschalteten Teilfunktionen.

## Claims

1. Driver assistance system for motor vehicles, having a plurality of subfunctions which support the driver in driving the vehicle, having at least one input element (22) which permits the driver to activate or deactivate subfunctions, wherein a plurality of predefined operating modes are provided which each comprise a subset of the available subfunctions and are arranged semi-ordered in a series according to the functional scope and the input element (22) is designed to switch from one operating mode to the next by means of a single input instruction, **characterized in that** the input element (22) is embodied as a momentary contact switch and at the same time as a rotary knob for selecting a parameter (t) for the respectively set operating mode.

2. Driver assistance system according to Claim 1, **characterized in that** one of the subfunctions is a speed control function.

3. Driver assistance system according to Claim 1 or 2, **characterized in that** one of the subfunctions is a distance control function.

4. Driver assistance system according to one of the preceding claims, **characterized in that** one of the subfunctions is a warning function which informs the driver of an imminent risk of collision by means of a warning signal (WS).

5. Driver assistance system according to one of the preceding claims, **characterized in that** one of the subfunctions consists in outputting a distance correction request (AK) if the measured actual distance (Di) from a vehicle travelling ahead differs significantly from a predefined setpoint distance (Ds).

6. Driver assistance system according to Claims 3 and 5, **characterized in that** the setpoint distance for the distance control is the same as for the distance correction request.

7. Driver assistance system according to one of the preceding claims, **characterized by** a display (38) for displaying the respectively activated subfunctions.

## Revendications

1. Système de conduite assistée de véhicules automobiles à plusieurs fonctions partielles assistant le conducteur pour la conduite du véhicule, comportant au moins un élément d'entrée (22) permettant au conducteur de brancher ou de couper des fonctions partielles, plusieurs modes de fonctionnement étant prédéfinis qui comprennent chacun une partie des fonctions partielles disponibles et sont semi-ordonnées selon l'importance des fonctions dans une série et
l'élément d'entrée (22) est réalisé pour commuter avec un seul ordre d'entrée d'un mode de fonctionnement au mode de fonctionnement suivant,
**caractérisé en ce que**
l'élément d'entrée (22) est réalisé à la fois comme bouton-poussoir et comme bouton tournant pour choisir un paramètre (t) pour le mode de fonctionnement respectivement réglé.

2. Système d'assistance de conduite selon la revendication 1,
**caractérisé en ce qu'**
il est l'une des fonctions partielles d'une fonction de régulation de vitesse.

3. Système d'assistance de conduite selon les revendications 1 ou 2,
**caractérisé en ce qu'**
il est l'une des fonctions partielles d'une fonction de régulation de distance.

4. Système d'assistance de conduite selon l'une des revendications précédentes,
**caractérisé en ce qu'**
il est l'une des fonctions partielles d'une fonction d'avertissement qui indique au conducteur un risque de collision imminent par un signal avertisseur (WS).

5. Système d'assistance de conduite selon l'une des revendications précédentes,
**caractérisé en ce que**
la fonction partielle consiste à émettre une requête de correction de distance (AK) si la distance réelle mesurée (Di) par rapport à un véhicule qui précède, diffère de manière significative d'une distance de consigne prédéfinie (Ds).

6. Système d'assistance de conduite selon l'une des revendications 3 et 5,
**caractérisé en ce que**
la distance de consigne pour la régulation de distance est la même que la demande de correction de distance.

7. Système d'assistance de conduite selon l'une des revendications précédentes,
**caractérisé par**
un afficheur (38) pour afficher les fonctions partielles déjà activées.
